(19) Europäisches Patentamt
European Patent Office
Office européen des brevets

(11) **EP 4 212 932 A1**

(12) **EUROPEAN PATENT APPLICATION**

(43) Date of publication:
**19.07.2023 Bulletin 2023/29**

(21) Application number: **23151330.0**

(22) Date of filing: **12.01.2023**

(51) International Patent Classification (IPC):
***G02B 6/44*** (2006.01)

(52) Cooperative Patent Classification (CPC):
**G02B 6/4429; G02B 6/4413; G02B 6/4414**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2022 IN 202211001824**

(71) Applicant: **Sterlite Technologies Limited Haryana 122002 (IN)**

(72) Inventor: **Sahoo, Kishore**
**122002 Gurugram (IN)**

(74) Representative: **Petraz, Gilberto Luigi et al GLP S.r.l.**
**Viale Europa Unita, 171**
**33100 Udine (IT)**

(54) **OPTICAL FIBER CABLE WITH DIFFERENT BINDER PITCH**

(57) The present disclosure relates to an optical fiber cable (200) with a different binder pitch comprising a plurality of tubes (204) with one or more optical transmission elements (202), a first binder (208) and a second binder (210) wound around the plurality of tubes (204) helically. The first lay length of the first binder (208) is different than a second lay length of the second binder (210) and a lay ratio of the first lay length to the second lay length is equal to or more than 1.2. And the difference between a first stranding angle and a second stranding angle of the first binder (208) and the second binder (210) respectively is greater than or equal to 5 degrees.

**FIG. 2**

EP 4 212 932 A1

## Description

### TECHNICAL FIELD

Embodiments of the present disclosure relate to the field of optical fiber cables and more particularly relates to an optical fiber cable with a different binder pitch.

This application claims the benefit of Indian Application No. 202211001824 titled "OPTICAL FIBER CABLE WITH DIFFERENT BINDER PITCH" filed by the applicant on January 12, 2022, which is incorporated herein by reference in its entirety.

### BACKGROUND ART

Optical fiber cables have secured an important position in building the optical network of modern communication systems across the globe. The optical fiber cables are part of millions of miles of the optical network that provide better connectivity and high bandwidth.

An optical fiber (i.e., a glass fiber typically surrounded by one or more coating layers) conventionally includes an optical fiber core, which transmits and/or amplifies an optical signal, and an optical cladding, which confines the optical signal within the core. Accordingly, the refractive index of the core nc is typically greater than the refractive index of the optical cladding ng (i.e., nc>ng).

Optical fiber cables generally include a plurality of strength members for improving the tensile strength of optical fibers and a plurality of water blocking members for preventing the intrusion of moisture into the optical fibers. Such optical fiber cables may have a loose tube structure with optical fibers contained in a plurality of tubes or a ribbon cable structure with a plurality of ribbon optical fibers. At present, in the optical fiber communication network, the loose tube layer stranded type and the central tube type optical cable are widely used. In the optical cable of these structures, the optical fiber loose tube is the core component of its composition.

In the manufacturing process of traditional stranded optical cables, loose tubes need to be twisted together in S-type and SZ-type to strengthen the tensile performance of the optical cable, reduce the strength components, and save the cost of optical cable manufacturing. Moreover, binding of the loose tubes is necessary to hold the optical components properly.

European patent application no. EP2390700 titled "Bundled fiber optic cables" discloses binding technique in which two binders 104, 106 are contra-helically wound with the same pitch to restrict opening of stranded loose tubes 102.

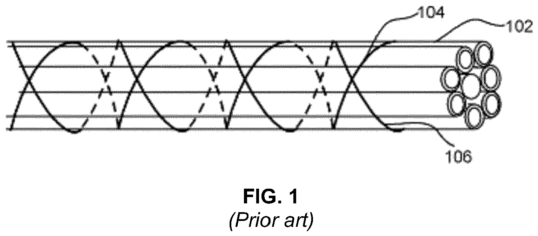

Fig. 1 is a pictorial snapshot illustrating a binding technique in which two binders 104, 106 are contra-helically wound with the same pitch to restrict opening of stranded loose tubes 102, in accordance with an embodiment of the prior art.

US patent application no. US8184934B2 titled "Optical fiber cable" discloses a fiber optic cable having a jacket, at least one tube and at least two fibers within the tube in a loose tube arrangement.

US patent application no. US20050265674A1 titled "Optical fiber cable" discloses an optical fiber cable including a plurality of loose tubes and an outer jacket for binding the loose tubes.

However, there are a few drawbacks in the current technologies employing optical fiber cables with loose tubes. In particular, due to the same pitch of the binders, all overlapping portions of the binders align longitudinally along the length of the optical fiber cables, which drives a risk of the loose tubes bulging out from the positions where there is no overlap between the binders. Moreover, as the structure of the optical cable decreases, the size of the loose tube is also continuously reduced, and the wall thickness is getting thinner and thinner. As the dry optical cable disclosed in the prior arts uses water blocking yarn instead of grease, the inner side of the loose tube lacks support. During the production process, the fluctuation of the yarn binding tension will affect the quality of the loose tube. Alternatively, when the yarn binding tension is too small, the loose tube will spread out and the outer diameter will change.

Accordingly, to overcome the disadvantages of the prior arts, there is a need for a technical solution that overcomes the above-stated limitations in the prior arts. The present disclosure provides an optical fiber cable with improved binding technique.

### SUMMARY OF THE DISCLOSURE

Embodiments of the present disclosure provide at least two binders having different binder pitch (synonymously referred to as "lay-length"). The optical fiber cable comprises a plurality of tubes such that each of the plurality of tubes encloses one or more optical transmission elements, a first binder and a second binder wound around the plurality of tubes. In particular, the first lay length of the first binder is different from the second lay length of the second binder.

According to the first aspect of the present disclosure, the lay ratio is equal to or more than 1.2. And, the lay ratio is a ratio of the first lay length of the first binder to the second lay length of the second binder. Alternatively, the lay ratio is a ratio of the second lay length of the second binder to the first lay length of the first binder.

According to a second aspect of the present disclosure, the plurality of tubes is arranged in one or more layers. Particularly, each layer is wound by a pair of binders. Moreover, the plurality of tubes is stranded around a central strength member. Further, the plurality of tubes is stranded in SZ fashion.

According to a third aspect of the present disclosure, the first binder and the second binder are wound around the plurality of tubes helically. The first binder is wound in a clockwise direction and the second binder is wound in an anti-clockwise direction. Alternatively, the first binder and the second binder are wound in the same direction.

According to a fourth aspect of the present disclosure, a difference between a first stranding angle and a second stranding angle of the first binder and the second binder respectively is greater than or equal to 5 degrees.

According to a fifth aspect of the present disclosure, the first binder and the second binder are single-end type binders. Alternatively, the first binder and the second binder are dual-end type binders.

The foregoing solutions of the present disclosure are attained by employing an optical cable with a different binder pitch. These and other aspects herein will be better appreciated and understood when considered in conjunction with the following description and the accompanying drawings. It should be understood, however, that the following descriptions are given by way of illustration and not of limitation. Many changes and modifications may be made within the scope of the disclosure herein without departing from the spirit thereof.

**BRIEF DESCRIPTION OF DRAWINGS**

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a snapshot illustrating a conventional binding technique depicting a same binder pitch in accordance with a prior art;

Fig. 2 is a snapshot illustrating an optical fiber cable with different binder pitch in accordance with an embodiment of the present disclosure;

Fig. 3 is a snapshot illustrating a binding technique depicting the different binder pitch in accordance with another aspect of the present disclosure.

**ELEMENT LIST**

Optical fiber cable - 200
Optical transmission elements 202
Plurality of tubes - 204
Central strength member -206
Transmission elements- 208
Second binder- 210
Binder layer 212

Outer layer 214

The optical fiber is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

**DESCRIPTION OF EMBODIMENTS**

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**The following brief definition of terms shall apply throughout the present disclosure:**

An optical fiber refers to a medium associated with transmission of information over long distances in the form of light pulses. The optical fiber uses light to transmit voice and data communications over long distances when encapsulated in a jacket/sheath. The optical fiber may be of ITU.T G.657.A2 category. Alternatively, the optical fiber may be of ITU.T G.657.A1 or G.657.B3 or G.652.D or other suitable category.

ITU.T, stands for International Telecommunication Union-Telecommunication Standardization Sector, is one of the three sectors of the ITU. The ITU is the United Nations specialized agency in the field of telecommunications and is responsible for studying technical, operating and tariff questions and issuing recommendations on them with a view to standardizing telecommunications on a worldwide basis.

Crush resistance is an ability of a cable to withstand and/or recover from the effects of a compressive force.

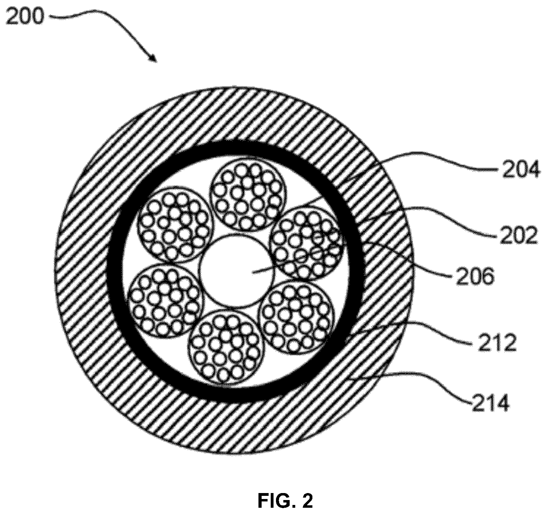

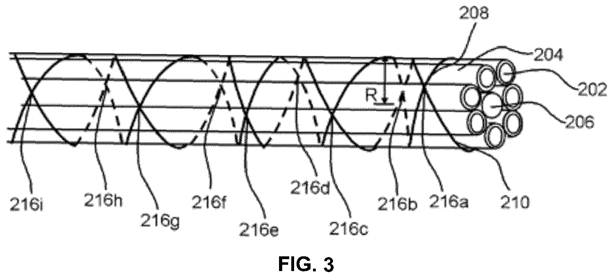

Now we will simultaneously refer to Fig. 2, a snapshot illustrating an optical fiber cable with different binder pitch in accordance with an embodiment of the present disclosure and Fig. 3, a snapshot illustrating a binding technique depicting the different binder pitch in accordance with another aspect of the present disclosure. The optical fiber cable 200 includes one or more optical transmission elements 202, a plurality of tubes 204, a central strength member 206, a binder layer 212 and an outer layer 214. In particular, the one or more optical transmission elements (aka "optical fiber") 202 may be present in form of, but not limited to, a group of loose optical fibers, a group of optical fiber ribbons or a stack of optical fiber ribbons, a group of rollable ribbons, a group of corrugated ribbons, a group of partially/intermittently bonded optical fiber ribbons, a group of flat ribbons.

In accordance with an embodiment of the present disclosure, the optical fiber may be a bend insensitive fiber that has less degradation in optical properties or less increment in optical attenuation during bending of the optical fiber cable and to maintain the optical properties during multiple winding/unwinding operations of the optical fiber cable.

In some aspects of the disclosure, the optical fiber may be coloured fiber. The optical fiber may be a single-core optical fiber, a multi-core optical fiber, a single-mode optical fiber, a multimode optical fiber or the like. The single mode optical fiber carries only a single mode of light and the multimode optical fiber carries multiple modes of light to propagate. The multicore optical fibers consist of multiple cores as opposed to the single-core optical fiber that comprise only a single core.

The one or more optical transmission elements 202 may be encapsulated in the plurality of tubes 204. In particular, the plurality of tubes 204 provide mechanical isolation and protection to the one or more optical transmission elements 202 from physical damages. Moreover, the plurality of tubes 204 may be but not limited to buffer tubes, loose tubes, tight buffered tubes, flexible tubes. Further, the plurality of tubes 204 may be made up of, but not limited to, PBT (polybutylene terephthalate), polypropylene (PP), polyamide, thermoplastic material or a combination of any suitable material.

In an alternate embodiment of the present disclosure, the plurality of tubes 204 may be stranded around each other.

The plurality of tubes 204 may be stranded around the central strength member 206 in SZ fashion. In SZ stranding, a number of turns are wound in S direction and then a number of turns in Z direction throughout the length. In particular, the central strength member 206 may provide mechanical strength, stiffness to the optical fiber cable 200, enhanced break load and excellent crush protection/resistance performance. Further, the central strength member 206 may be made of, but not limited to, FRP (Fiber Reinforced Plastic), ARP (Aramid Reinforced Plastic) or any other suitable dielectric/strength material. The central strength member 206 may have a round shape, a flat shape or any other suitable shape.

In accordance with an embodiment of the present disclosure, the plurality of tubes 204 may be encapsulated by the binder layer 212. In particular, the binder layer 212 may be formed by a pair of binders, i.e., a first binder 208 and a second binder 210 (as shown in Fig. 3). Moreover, the first binder 208 and the second binder 210 may be wound around the plurality of tubes 204 helically such that a first lay length of the first binder 208 is different than a second lay length of the second binder 210. The lay ratio is a ratio of the first lay length (L1) to the second lay length (L2) or a ratio of the second lay length to the first lay length. Further, lay ratio is equal to or more than 1.2

In an exemplary example, if the first binder 208 has the first lay length (L1) as 50mm and the second binder 210 has the second lay length (L2) as 35mm, then the lay ratio will be 1.4.

In an implementation, the first binder 208 may be wound in a clockwise direction and the second binder 210 may be wound in an anti-clockwise direction. In an alternative implementation, the first binder 208 may be wound in an anti-clockwise direction and the second binder 210 may be wound in a clockwise direction. In yet alternative implementation, the first binder 208 and the second binder 210 may be wound in the same direction. In yet another alternative implementation, for a tubeless optical fiber cable, the first binder 208 and the second binder 210 may be wound around one or more bundles of optical transmission elements 202. The first binder 208 and the second binder 210 may be coloured and/or coated with a water swellable material and/or a fire retardant material.

The first binder 208 and the second binder 210 may be defined by a first stranding angle and a second stranding angle. The difference between the first stranding angle and the second stranding angle is greater than or equal to ±5 degrees. A stranding angle ($\alpha$) may be given as

$$\alpha = \tan^{-1}\left(\frac{L}{2*\pi*R}\right);$$

wherein L is a lay length and R is a stranding radius.

For example, L1 = 50mm, L2 = 35mm, R = 4mm, then $\alpha_1$ = tan$^{-1}$(50/2* $\pi * 4$) and $\alpha_2$ = tan$^{-1}$(35/2* $\pi * 4$). Accordingly, $\alpha_1$ - $\alpha_2$ = 9 degrees.

Generally, the stranding angle is an angle between a stranding element i.e., binders and cross-section of the optical fiber cable 200, the stranding radius R is a distance between a longitudinal cable axis and middle of the stranding element and the lay length refers to a distance required to complete one revolution of the stranding element around a diameter of a bundle of the plurality of tubes 204.

The first binder 208 and the second binder 210 may be single-end type binders. Alternatively, the first binder 208 and the second binder 210 may be dual-end type binders. Alternatively, the first binder 208 and the second binder 210 may be a combination of a single-end type binder and a dual-end type binder. Typically, in a single-end type binder, all filaments of a binder are assembled together in a single group, whereas, in a dual-end type binder, the filaments of the binder are assembled in two groups, having substantially equal number of filaments in each group.

In accordance with an embodiment of the present disclosure, the plurality of tubes 204 may be arranged in one or more layers. In particular, each layer is wound by the pair of binders having aforesaid parameters and characteristics. The binder layer 212 may be surrounded by the outer layer 214. The outer layer 214 may be a jacket or a sheath.

Usually, sheathing (extrusion) is a process of squeezing a molten sheathing material through a funnel of a die as the core runs through the center performed at a high temperature (preferably more than 100°C). The sheathing material for the sheath may include, but not limited to, polyvinyl chloride, polyethylene (such as High Density Poly Ethylene (HDPE), Medium Density Poly Ethylene, and Low Density Poly Ethylene), polyurethane, thermoplastic rubber/elastomer, thermoplastic chlorinated polyethylene or combination thereof.

Advantageously, the optical fiber cable with at least two binders having different binder pitch due to different binder pitch or lay lengths, radial position of overlapping portions (216a, 216b, 216c, 216d, 216e, 216f, 216g, 216h, 216i), of the pair of binders along the length provides a better hold on the stranded plurality of tubes 204 and avoids bulging issues, thereby facilitating easy handling. Further, one lay-length can be kept bigger in the optical fiber cable 200, i.e., lesser amount of binder is required, which reduces the cost.

It may be noted that the optical fiber cable 200 may contain one or more elements depending upon requirement and implementation. Non-limiting examples of the one or more elements are binders, water blocking tape, fire retardant tape, metal tape, rip cords, water swellable yarns, water blocking gel, strength yarns, dielectric armouring, ECCS (Electro Chrome Coated Steel) tape etc.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. An optical fiber cable (200) **characterized in that**:

   a plurality of tubes (204) such that each of the plurality of tubes (204) encloses one or more optical transmission elements (202); and
   a first binder (208) and a second binder (210) wound around the plurality of tubes (204),

   wherein a first lay length of the first binder (208) is different than a second lay length of the second binder (210).

2. The optical fiber cable (200) as claimed in claim 1, wherein a lay ratio is equal to or more than 1.2.

3. The optical fiber cable (200) as claimed in claim 1, wherein the lay ratio is a ratio of the first lay length of the first binder (208) to the second lay length of the second binder (210).

4. The optical fiber cable (200) as claimed in claim 1, wherein the lay ratio is a ratio of the second lay length of the second binder (210) to the first lay length of the first binder (208).

5. The optical fiber cable (200) as claimed in claim 1, wherein the plurality of tubes (204) is arranged in one or more layers.

6. The optical fiber cable (200) as claimed in claim 1, wherein each layer is wound by a pair of binders.

7. The optical fiber cable (200) as claimed in claim 1, wherein the plurality of tubes (204) is stranded around a central strength member (206).

8. The optical fiber cable (200) as claimed in claim 1, wherein the plurality of tubes (204) is stranded in SZ fashion.

9. The optical fiber cable (200) as claimed in claim 1, wherein the first binder (208) and the second binder (210) are wound around the plurality of tubes (204) helically.

10. The optical fiber cable (200) as claimed in claim 1, wherein the first binder (208) is wound in a clockwise direction and the second binder (210) is wound in an anti-clockwise direction.

11. The optical fiber cable (200) as claimed in claim 1, wherein the first binder (208) and the second binder (210) are wound around the plurality of tubes (204) helically.

12. The optical fiber cable (200) as claimed in claim 1, wherein the first binder (208) and the second binder (210) are wound in a same direction.

13. The optical fiber cable (200) as claimed in claim 1, wherein a difference between a first stranding angle and a second stranding angle of the first binder (208) and the second binder (210) respectively is greater than or equal to 5 degrees.

14. The optical fiber cable (200) as claimed in claim 1, wherein the first binder (208) and the second binder (210) are single-end type binders.

15. The optical fiber cable (200) as claimed in claim 1, wherein the first binder (208) and the second binder (210) are dual-end type binders.

**FIG. 1**
*(Prior art)*

FIG. 2

**FIG. 3**

Europäisches
Patentamt

European
Patent Office

Office européen
des brevets

# EUROPEAN SEARCH REPORT

Application Number

EP 23 15 1330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 390 700 A1 (DRAKA COMTEQ BV [NL]) 30 November 2011 (2011-11-30) * paragraphs [0001], [0004], [0054], [0056], [0072], [0075], [0077] - [0081], [0094] - [0095] * | 1-15 | INV. G02B6/44 |
| X | CN 214 954 252 U (FIBERHOME TELECOMMUNICATION TECH CO LTD) 30 November 2021 (2021-11-30) * the whole document * | 1 | |
| X | JP 2009 080346 A (SUMITOMO ELECTRIC INDUSTRIES; TOYOKUNI DENSEN KK) 16 April 2009 (2009-04-16) * paragraph [0039]; figure 10 * | 1 | |
| A | US 2014/219618 A1 (BARRETT LOUIS ALEXANDER [US] ET AL) 7 August 2014 (2014-08-07) * figure 1 * | 6 | |
| A | US 2013/202262 A1 (HAYMORE DANIEL P [US]) 8 August 2013 (2013-08-08) * figure 4 * | 6 | TECHNICAL FIELDS SEARCHED (IPC) G02B |

The present search report has been drawn up for all claims

| Place of search | Date of completion of the search | Examiner |
|---|---|---|
| Berlin | 19 April 2023 | Verdrager, Véronique |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 15 1330

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2023

| Patent document cited in search report | | Publication date | Patent family member(s) | | Publication date |
|---|---|---|---|---|---|
| EP 2390700 | A1 | 30-11-2011 | EP 2390700 | A1 | 30-11-2011 |
| | | | ES 2587432 | T3 | 24-10-2016 |
| | | | PL 2390700 | T3 | 30-12-2016 |
| | | | PT 2390700 | T | 19-10-2016 |
| | | | US 2011268398 | A1 | 03-11-2011 |
| CN 214954252 | U | 30-11-2021 | CN 214954252 | U | 30-11-2021 |
| | | | DE 202022102602 | U1 | 29-09-2022 |
| | | | ES 1291249 | U | 31-05-2022 |
| | | | NL 2031850 | A | 01-07-2022 |
| JP 2009080346 | A | 16-04-2009 | NONE | | |
| US 2014219618 | A1 | 07-08-2014 | AU 2009302210 | A1 | 15-04-2010 |
| | | | CA 2739081 | A1 | 15-04-2010 |
| | | | CN 102197327 | A | 21-09-2011 |
| | | | EP 2344920 | A1 | 20-07-2011 |
| | | | US 2011211793 | A1 | 01-09-2011 |
| | | | US 2014029905 | A1 | 30-01-2014 |
| | | | US 2014219618 | A1 | 07-08-2014 |
| | | | WO 2010042816 | A1 | 15-04-2010 |
| US 2013202262 | A1 | 08-08-2013 | NONE | | |

EPO FORM P0459

For more details about this annex : see Official Journal of the European Patent Office, No. 12/82

**EP 4 212 932 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202211001824
- EP 2390700 A
- US 8184934 B2
- US 20050265674 A1